# EUROPÄISCHE PATENTSCHRIFT

(11) **EP 2 824 013 B1**
(45) Veröffentlichungstag und Bekanntmachung des Hinweises auf die Patenterteilung: **25.05.2016**
(21) Anmeldenummer: 14176581.8
(22) Anmeldetag: 10.07.2014
(51) Int. Cl.: B62B 5/00, B62B 3/10

(54) **Eimer mit einem Rolluntersatz**
Bucket with roller base
Seau doté d'un socle roulant

(30) Priorität: 10.07.2013 DE 102013107319
(43) Veröffentlichungstag der Anmeldung: 14.01.2015
(73) Patentinhaber: Leifheit AG, 56377 Nassau (DE)
(72) Erfinder: Fischer, Klaus-Jürgen, 56379 Holzappel (DE); May, Thorsten, 56379 Obernhof (DE); Zens, Detlef, 57632 Burglahr (DE)
(74) Vertreter: Bungartz Christophersen Partnerschaft mbB Patentanwälte

(56) Entgegenhaltungen:
- US-A- 1 853 318
- US-A- 2 665 922
- US-A- 3 298 704

## Beschreibung

Die Erfindung betrifft einen Eimer mit einem Rolluntersatz, wobei der Rolluntersatz einen Tragbereich zum Aufstellen des Eimers mit einem vorderen Tragbereich und einen mit dem vorderen Tragbereich über einen Verbindungsabschnitt verbundenen hinteren Tragbereich und wenigstens eine Rolle zum Verfahren des Rolluntersatzes aufweist und der Eimer mit seinem unteren Bereich auf den Tragbereich derart aufsetzbar ist, dass er zumindest gegen Verschieben in eine zum Boden des Eimers parallele Richtung gesichert ist.

Ein Eimer mit einem Rolluntersatz dieser Art ist aus der DE 10 2006 021 278 A1 bekannt. Bei diesem Eimer ist der Rolluntersatz als selbständiges Fahrzeug ausgebildet, auf das der Eimer aufstellbar ist. Nicht besonders vorteilhaft ist hierbei, dass der Eimer lose auf der Plattform aufsteht, so dass dann, wenn der Eimer zum Beispiel beim Wechsel der Etage angehoben wird, der Rolluntersatz herunterfällt.

Zwar kann dies durch eine Klemmverbindung vermieden werden, diese ist dann aber entweder schwer einzufädeln oder nicht hinreichend sicher. Insbesondere vor dem Hintergrund, dass die gattungsgemäßen Eimer in der Regel aus Kunststoff gefertigt werden, ist nach einer gewissen Nutzungsdauer die Gefahr gegeben, dass reibschlüssige Verbindungen infolge des Verschleißes versagen.

Weitere, unter einen Behälter klemmbare Rolluntersätze sind aus der US 3 298 704 A, der US 1 853 318 A und der US 2 665 922 A bekannt, die jeweils verstellbare Verbindungsabschnitte zwischen Rollenhaltern aufweisen, die nach Längenverstellung zur Anpassung an die Größe der Behälterunterseite über Klemmschrauben den Behälter einspannend fixiert werden können. Aufgabe der Erfindung ist es daher, einen Eimer mit einem Rolluntersatz zu schaffen, bei dem der Rolluntersatz am Eimer gehalten ist, aber möglichst leicht abnehmbar ist.

Diese Aufgabe wird nach der Erfindung dadurch gelöst, dass der Eimer im unteren Bereich an oberhalb des vorderen Tragbereichs und des hinteren Tragbereichs angeordneten Haltepositionen jeweils zumindest eine, von oben und aus Richtung der Mitte des Eimers hintergreifbare Haltekante aufweist und der Rolluntersatz im vorderen Tragbereich und im hinteren Tragbereich unterhalb der Haltepositionen jeweils einen sich nach oben erstreckenden Befestigungsbereich mit einem nach außen hervorspringenden Widerlagerrand aufweist. Der Widerlagerrand ist dabei derart ausgebildet, dass er zum Befestigen des Rolluntersatzes an dem Boden des Eimers die Haltekante zu hintergreifen vermag.

Zum Lösen des Rolluntersatzes ist der Verbindungsabschnitt elastisch ausgebildet, so dass durch Ziehen an dem Verbindungsabschnitt der Tragbereich bogenförmig deformiert wird und sich damit die vom dem Tragbereich nach oben gerichteten Befestigungsbereiche nach innen in Richtung der Mitte des Eimers verschwenken. Da diese Bewegung bewirkt, dass sich der Widerlagerrand in die Mitte bewegt, wird somit die Überdeckung der Haltekante durch den Widerlagerrand aufgehoben und der Rolluntersatz kann dann abgezogen werden.

Bevorzugt ist der Rolluntersatz dadurch gekennzeichnet, dass das Fahrgestell einen vorderen Bereich mit wenigstens einer Rolle und zumindest einem Widerlagerrand und einen hinteren Bereich mit wenigstens einer Rolle und zumindest einem weiteren Widerlagerrand aufweist, wobei der vordere Bereich und der hintere Bereich über ein derart verformbares Verbindungselement miteinander verbunden sind, dass eine Verformung des Verbindungselements zumindest einen der Widerlagerränder außer Eingriff mit der zugeordneten Haltekante am Eimer bringt.

Zum Halten des Rolluntersatzes am Eimer hintergreift dieser Rolluntersatz mit seinen Widerlagerrändern korrespondierende Haltekanten am Eimer. Um den Rolluntersatz abnehmen zu können, muss zumindest ein Widerlagerrand relativ zur zugeordneten Haltekante bewegt werden. Dies kann grundsätzlich durch Verformung des Rolluntersatzes, insbesondere des Verbindungsabschnitts geschehen. Eine solche Verformung lässt sich durch Auseinanderziehen des Rolluntersatzes bewirken, hierzu kann dieser entsprechend ausgebildet sein, zum Beispiel einen teleskopierbaren Bereich aufweisen oder abschnittsweise oder vollständig elastisch ausgebildet sein.

Besonders vorteilhaft ist aber eine Lösung, die über das Verbiegen des Rolluntersatzes die Relativbewegung zwischen Widerlagerrand und Haltekante realisiert. Hierzu ist ein Teil des Rolluntersatzes, bevorzugt der Verbindungsabschnitt zwischen dem vorderen Haltebereich und dem hinteren Haltebereich, elastisch ausgebildet. Zieht der Benutzer nun den Rolluntersatz in der Mitte nach unten, deformiert sich dieser bogenförmig. Die nach oben hervorspringenden Befestigungsbereich werden hierdurch nach innen geschwenkt und damit der hieran angeordnete Widerlagerrand von der Haltekante wegbewegt.

Bevorzugt ist also eine reine Biegebewegung zum Lösen der Verbindung vorgesehen, allerdings kann die Erfindung auch über eine Kombination der Biegebewegung mit einem ausziehbaren Verbindungsabschnitt erfolgen oder auch durch eine reine Auszugsbewegung realisiert werden, wenn der Verbindungsabschnitt entsprechend ausgebildet ist.

Der Verbindungsabschnitt kann beispielsweise in der Mitte in einer zum Boden des Eimers rechtwinkligen Richtung biegbar sein. Dies kann über ein Gelenk oder einen elastischen Bereich realisiert sein, wobei eine Rückstellkraft vorgesehen ist, die den Verbindungsabschnittin der initialen Ausgangsstellung hält, in der die Widerlagerränder die Haltekanten überdecken. Durch das Verbiegen des Verbindungsabschnittes stellen sich der angrenzende vordere Tragbereich und der hintere Tragbereich schräg, was wiederum den Hinterschnitt der von dem Widerlagerrand und der Haltekante gebildeten Haltemittel aufhebt.

Der vordere Tragbereich und/oder der hintere Tragbereich weisen bei einer bevorzugten Ausgestaltung als Befestigungsbereich jeweils wenigstens eine horizontale Rastnase zur Bildung des Widerlagerrandes auf. Diese hintergreift dann eine bei einem auf einem Boden stehenden Eimer horizontal angeordnete Haltekante des Eimers.

Der Widerlagerrand des Befestigungsbereichs kann grundsätzlich nach außen oder nach innen gerichtet sein. Ist er nach innengerichtet, müssen zum Lösen der Befestigung die beiden gegenüberliegenden Widerlagerränder auseinander gezogen werden. Dies hat den Nachteil, dass in der Regel zwei Hände benötigt werden oder ein Kippmoment auf den gegebenenfalls mit Wasser gefüllten Eimer aufgebracht wird.

Bevorzugt sind daher die Widerlagerränder nach außen gerichtet, so dass die Relativbewegung durch das nach unten ziehen des Tragbereichs erzielt werden kann. In diesem Fall wird der Benutzer den Tragbereich, bevorzugtim Bereich des Verbindungsabschnittes greifen und nach unten ziehen. Hierdurch ergibt sich dann die bogenartige, von oben gesehen konkave Verformung des Tragbereichs. Die sich von diesem nach oben erstreckenden Befestigungsbereiche kippen somit nach innen.

Der Eimerist dann so ausgebildet, dass die Befestigungsbereiche die Haltekanten hintergreifen können. Hierzu kann zum Beispiel im Boden des Eimers eine Einsenkung vorgesehen sein, in die die Befestigungsbereiche hineinragen können. Die Befestigungsbereiche können zum Beispiel als Höcker oder zylindrisch ausgebildet sein, die Einsenkung im Eimerboden ist dann korrespondierend ausgebildet, wobei so viel Spiel vorgesehen ist, dass die Kippbewegung der Befestigungsbereiche innerhalb der Einsenkung möglich ist.

Der Rolluntersatz kann bei einer bevorzugten Ausgestaltung zweiteilig mit einer arretierbaren und wieder lösbaren Verbindung ausgebildet sein. Dies ist besonders praktisch, wenn der Eimer so groß ist, dass er die beiden Teile des zerlegten Rolluntersatzes aufnehmen kann, so dass zu Lagerzwecken der Rolluntersatz in dem Eimer verstaut werden kann.

Die Trennung des Rolluntersatzes in zwei Teile ist bevorzugt im Bereich des Verbindungsbereiches angeordnet. Dann ergeben sich ungefähr gleich große Abschnitte, die jeweils T-förmig ausgebildet sein können und mit den äußeren Bereichen den vorderen und den hinteren Tragbereich bilden. An den Enden dieser Abschnitte können die Rollen oder Räder vorgesehen sein. Alternativ kann auch nur eine Seite mit Rollen versehen sein, oder auf einer Seite eine Rolle und auf der gegenüberliegenden Seite zwei Rollen angeordnet sein. Anstelle von Rollen können dabei auch gelagerte Rollkugeln Verwendung finden, die ebenso wie Walzen im Sinne der Erfindung den Rollen gleichgestellt sein sollen.

Bei einer besonders bevorzugten Ausgestaltung sind der vordere oder der hintere Tragbereich, oder auch beide Tragbereiche, mit jeweils zwei drehbaren Rollen versehen. Zumindest auf einer Seite können die Rollen um eine Drehachse derart drehbar sein, dass sie in einer Rollrichtung einen Nachlauf aufweisen, so dass sich ein stabiles Fahrverhalten des Rolluntersatzes in eine Fahrtrichtung ergibt.

Ein besonderer Vorteil der Erfindung besteht darin, dass durch einfaches Ziehen am Verbindungsbereich der Rolluntersatz derart deformiert wird, dass hierdurch der Widerlagerrand soweit nach innen verlagert wird, dass das Hintergreifen des Hinterschnitts mit der Haltekante aufgehoben wird. Der Benutzer kann also einfach den Rolluntersatz vom Eimer lösen. Gleichzeitig steht der Eimer auf dem vorderen und hinteren Tragbereich auf, wobei bevorzugt die Gewichtskraft so eingeleitet wird, dass das Eimergewicht der Lösedeformation entgegenwirkt. Hierzu kann zum Beispiel an dem vorderen und dem hinteren Tragbereich eine Aufstellfläche zum Aufstellen des Eimerbodens vorgesehen sein, wobei diese Aufstellfläche aus Sicht des Verbindungsbereichs hinter den Rollen angeordnet sein können. Dies bewirkt, dass das Eimergewicht eine von oben gesehen konvexe Verformung des Tragbereiches anstrebt, so dass die Verbindung zwischen Halterand und Widerlagerkante durch das Gewicht zusätzlich fixiert wird.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: einen Rolluntersatz einer erfindungsgemäßen Kombination aus Eimer und Rolluntersatz in einer zerlegten Ansicht von unten,
- Fig. 2: den Rolluntersatz aus Figur 1 in einer dreidimensionalen Ansicht von oben,
- Fig. 3: den in den Figuren 1 und 2 dargestellten Rolluntersatz in einer Ansicht von vorne,
- Fig. 4: den in den Figuren 1, 2 und 3 dargestellten Rolluntersatz in einer Seitenansicht,
- Fig. 5: den in den Figuren 1 bis 4 dargestellten Rolluntersatz in einer Ansicht von oben,
- Fig. 6: eine erfindungsgemäße Kombination aus Eimer und Rolluntersatz in einer dreidimensionalen Ansicht von oben,
- Fig. 7: die in Figur 6 dargestellte Kombination aus Eimer und Rolluntersatz in einer dreidimensionalen Ansicht von unten mit teilweise demontiertem Rolluntersatz und
- Fig. 8: die in den Figuren 6 und 7 dargestellte, auf den Kopf gestellte Kombination aus Eimer und Rolluntersatz in einer Seitenansicht.

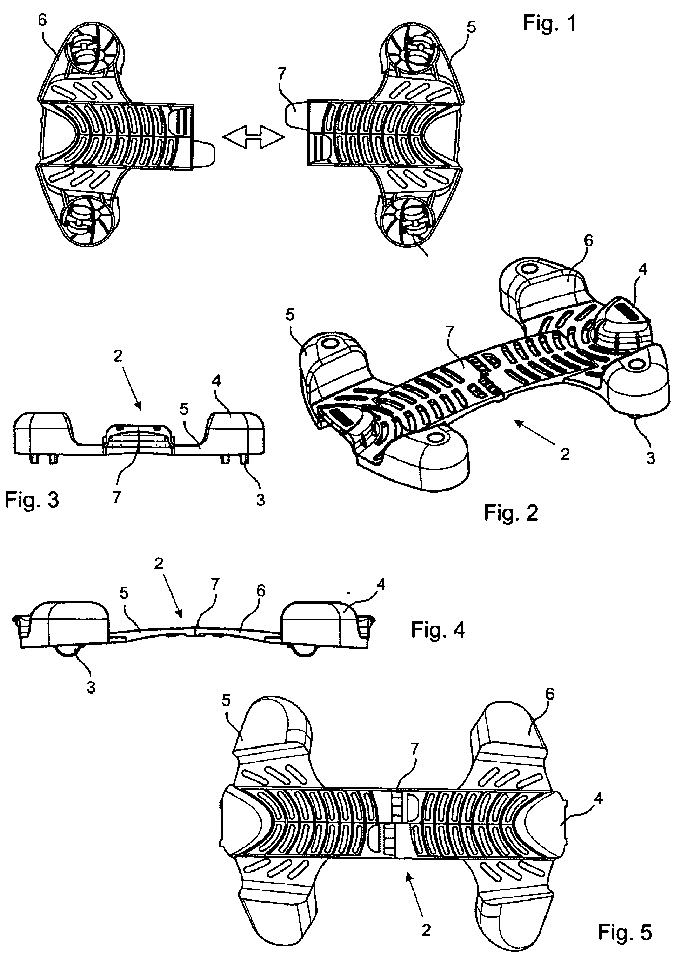

Figur 1 zeigt den Rolluntersatz 2 einer erfindungsgemäßen Kombination aus Eimer 1 und Rolluntersatz 2 in einer Ansicht von unten, wobei der vordere Tragbereich 5 und der hintere Tragbereich 6 des Rolluntersatzes 2 voneinander getrennt sind. Die so voneinander getrennten Einzelteile können zusammengelegt werden und in den hier nicht dargestellten Eimer 1 eingelegt werden.

Die beiden Tragbereiche 5,6 des Rolluntersatzes 2 haben im Wesentlichen die gleiche Form unterweisen an den Enden jeweils zwei seitlich auskragende Radhalter auf, an denen jeweils eine Rolle 3 drehbar gelagert ist.

Der vordere Tragbereich 5 und der hintere Tragbereich 6 des Rolluntersatzes 2 sind hier als Gleichteile ausgeführt und können mittig über eine bevorzugt lösbare Rastverbindung zusammengesteckt werden. Es sind vier lenkbare Räder vorgesehen. Im mittleren Verbindungsabschnitt 7 ist an jedem Tragbereich 5,6 jeweils eine Einsteckzunge vorgesehen, die in eine Tasche an dem gegenüberliegenden Tragbereich 6,5 einsteckt bei ist, so dass sich die beiden Tragbereiche 5,6 Form schlüssig miteinander verbinden lassen. Dadurch, dass der vordere Tragbereich 5 und der hintere Tragbereich 6 als Gleichteile ausgeführt sind, können Werkzeugkosten gesenkt werden.

In den Figuren 2 bis 5 ist der in Figur 1 dargestellte Rolluntersatz 2 in Ansichten von vorne (Figur 3), von der Seite (Figur 4), sowie in zwei Ansichten von oben (Figuren 2 und 5) nochmals in Details dargestellt.

Insbesondere in Figur 2 und Figur 5 ist zu erkennen, dass der Tragbereich von der Oberseite der beiden Einzelteile, nämlich dem vorderen Tragbereich 5 und dem hinteren Tragbereich 6, gebildet ist. Der vordere Tragbereich 5 und auch der hintere Tragbereich 6 weisen an den Enden, mittig zwischen den beiden Radlagern einen nach oben hervorspringenden Befestigungsbereich 4 auf. Diese hat im Wesentlichen die Form eines gerundeten Höckers und kann in eine entsprechende Einsenkung im Boden des Eimers 1 unter Belassung eines Spiels eingesetzt werden. An den nach innen gerichteten, äußeren Rändern dieser Befestigungsbereiche 4 ist der Widerlagerrand angeordnet, der nach innen hervorspringt. In den Einsenkungen im Boden des Eimers 1 sind entsprechende Haltekanten vorgesehen, die von oben von diesen Widerlagerrändern hintergriffen werden können.

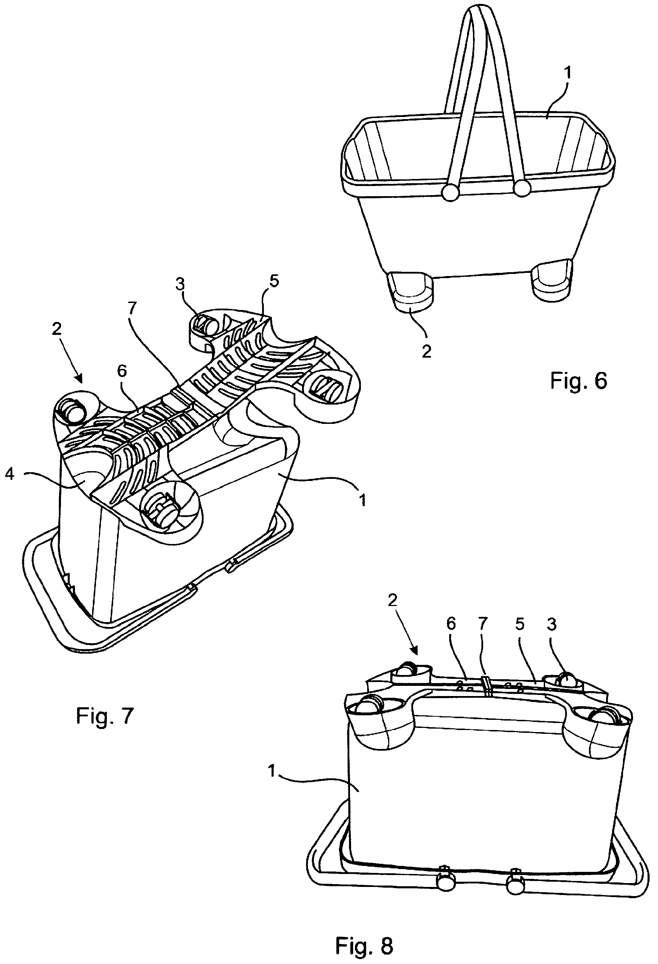

Die Figuren 7 und 8 zeigen die erfindungsgemäße Kombination aus Eimer 1 und Rolluntersatz 2, die hier beispielhaft aus Kunststoff gefertigt ist, von ihrer Unterseite.

Figur 7 zeigt, wie der Rolluntersatz 2 an der Unterseite des Eimers 1 befestigt werden kann. Die Befestigungsbereiche 4 greifen in Einsenkungen, die in der Eimerwandung angeordnet sind, ein.

Die Ausgestaltung mit den in die Einsenkungen eindringenden Befestigungsbereiche 4 in Form von Höckern oder Domen ist besonders vorteilhaft, weil der Eimer 1 damit in Bezug auf den Rolluntersatz 2 im Gebrauch, also insbesondere nach Füllen mit Flüssigkeit, niedriger liegt und der Gesamtaufbau daher einen deutlich günstigeren Schwerpunkt aufweist, was die Gefahr eines Umkippens des Systems aus Eimer 1 und Rolluntersatz 2 minimiert.

Der Benutzer kann die Kombination aus Eimer 1 und Rolluntersatz 2 einfach voneinandertrennen, indem er den Eimer 1 anhebt, von unten den Verbindungsabschnitt 7 greift und nach unten abzieht. Hierdurch deformiert sich der Tragbereich zumindest im Bereich des Verbindungsabschnittes 7, was wiederum bewirkt, dass die Befestigungsbereiche 4 mit ihren oberen Enden nach innen geschwenkt werden. Hierdurch überdecken die Widerlagerränder, die von diesen Befestigungsbereichen 4 im oberen Bereich seitlich nach außen hervorspringenden die an den Rändern des Eimers 1 vorgesehenen Haltekanten nicht mehr, so dass der Rolluntersatz 2 abgenommen werden kann.

Zum befestigen des Rolluntersatzes 2 wird der Eimer 1 einfach auf den Rolluntersatz aufgestellt. Die Einsenkung im Boden des Eimers 1 ist so ausgebildet, dass hierbei die Befestigungsbereiche 4 durch die an der äußeren Seite der Einsenkung geführten Widerlagerränder nach innen gedrückt werden, bis die Haltekante passiert wurde und die Widerlagerränder Federn nach außen zurückschnellen. Durch den so hergestellten Formschluss ist der Rolluntersatz 2 fest mit dem Eimer 1 verbunden.

Die beschriebene Ausgestaltung ist nur eine denkbare Umsetzung des erfindungsgemäßen Grundgedankens. Dieser besteht zum einen darin, dass durch Deformation des Rolluntersatzes 2 der Formschluss zwischen Eimer 1 und Rolluntersatz 2 aufgehoben wird.

Andererseits soll bei einem weiteren Teilaspekt die möglichst einfach erfolgen, indem nämlich der Benutzer eine Kraft auf einen Teilbereich des Rolluntersatzes 2 ausübt, wodurch diese Deformation erfolgt. Dies kann die beschriebene Zugkraft auf den Verbindungsabschnitt 7 sein. Natürlich kann auch eine Druckkraft, bei entsprechenden Spiel zwischen Eimerboden und Rolluntersatz, eine Deformation bewirken, wobei dann die Widerlagerränder und die Haltekanten so angeordnet sein müssen, dass die von oben gesehen konvexe Deformation den Formschluss aufhebt. Hierzu sind dann zum Beispiel die Haltekanten an der inneren Seite der Einsenkung im Boden des Eimers 1 angeordnet, wobei die Widerlagerränder von den erhabenen Befestigungsbereichen 4 dann nach innen hervorspringen. Dies wird aber nicht so einfach zu bedienen sein, wie die oben beschriebene Variante. Gleiches gilt für das Auseinanderziehen eines teleskopierbaren oder elastischen Rolluntersatzes.

### Bezugszeichenliste:

- 1: Eimer
- 2: Rolluntersatz
- 3: Rolle
- 4: Befestigungsbereich
- 5: Vorderer Tragbereich des Rolluntersatzes
- 6: Hinterer Tragbereich des Rolluntersatzes
- 7: Verbindungsabschnitt

## Patentansprüche

1. Eimer (1) mit einem Rolluntersatz (2), wobei
- der Rolluntersatz (2) einen Tragbereich zum Aufstellen des Eimers (1) mit einem vorderen Tragbereich (5) und einen mit dem vorderen Tragbereich (5) über einen Verbindungsabschnitt (7) verbundenen hinteren Tragbereich (6) und wenigstens eine Rolle (3) zum Verfahren des Rolluntersatzes (2) aufweist und
- der Eimer (1) mit seinem unteren Bereich auf den Tragbereich derart aufsetzbar ist, dass er zumindest gegen Verschieben in eine zum Boden des Eimers (1) parallele Richtung gesichert ist, **dadurch gekennzeichnet, dass**
der Eimer (1) im unteren Bereich an oberhalb des vorderen Tragbereichs (5) und des hinteren Tragbereichs (6) angeordneten Haltepositionen jeweils zumindest eine, von oben und aus Richtung der Mitte des Eimers (1) hintergreifbare Haltekante aufweist und der Rolluntersatz (2) im vorderen Tragbereich (5) und im hinteren Tragbereich (6) unterhalb der Haltepositionen jeweils einen sich nach oben erstreckenden Befestigungsbereich (4) mit einem nach außen hervorspringenden Widerlagerrand aufweist, der derart ausgebildet ist, dass er zum Befestigen des Rolluntersatzes (2) an dem Boden des Eimers (1) die Haltekante zu hintergreifen vermag, wobei zum Lösen des Rolluntersatzes (2) der Verbindungsabschnitt (7) derart elastisch ausgebildet ist, dass durch Ziehen am Verbindungsabschnitt (7) die Befestigungsbereiche (4) nach innen in Richtung der Mitte des Eimers (1) verschwenkt werden und hierdurch die Überdeckung der Haltekante durch den Widerlagerrand aufgehoben ist.

2. Eimer (1) mit einem Rolluntersatz (2) nach Anspruch 1, **dadurch gekennzeichnet, dass** an dem vorderen Tragbereich (5) und dem hinteren Tragbereich (6) jeweils zumindest eine Rolle (3) angeordnet ist.

3. Eimer (1) mit einem Rolluntersatz (2) nach Anspruch 1 oder 2, **dadurch gekennzeichnet, dass** an dem vorderen Tragbereich (5) und dem hinteren Tragbereich (6), jeweils an Positionen, die dem Verbindungsabschnitt (7) abgewandt sind, Stützflächen zum Aufstellen des Bodens des Eimers (1) vorgesehen sind.

4. Eimer (1) mit einem Rolluntersatz (2) nach einem der vorhergehenden Ansprüche, **dadurch gekennzeichnet, dass** der Verbindungsabschnitt (7) zweiteilig mit einer über Rastmittel arretierbaren Steckverbindung ausgebildet ist.

5. Eimer (1) mit einem Rolluntersatz (2) nach dem vorhergehenden Anspruch, **dadurch gekennzeichnet, dass** die Steckverbindung derart ausgebildet ist, dass sie in unterschiedlichen Einstecktiefen über die Rastmittel arretierbar ist.

6. Eimer (1) mit einem Rolluntersatz (2) nach einem der vorhergehenden Ansprüche, **dadurch gekennzeichnet, dass** der vordere Tragbereich (5) und der hintere Tragbereich (6) jeweils einen Befestigungsbereich (4) in Form eines sich von einer Aufstellfläche nach oben erstreckenden Höckers aufweist, wobei der Befestigungsbereich (4) jeweils an der dem Verbindungsabschnitt (7) gegenüberliegenden Außenseite des Tragbereichs angeordnet ist.

7. Eimer (1) mit einem Rolluntersatz (2) nach einem der vorhergehenden Ansprüche, **dadurch gekennzeichnet, dass** der Eimer (1) in seinem Boden für die Aufnahme der Befestigungsbereiche (4) jeweils eine Vertiefung in Form einer Einsenkung aufweist, wobei die Haltekante an der, der Außenseite des Eimers (1) zugewandten Außenseite der Vertiefung angeordnet ist und die nach oben hervorspringenden Befestigungsbereiche (4) des Rolluntersatzes (2) jeweils in eine Vertiefung unter Belassung eines derartigen Spiels einsetzbar sind, dass durch Ziehen an dem Verbindungsabschnitt (7) und die damit einhergehende Verformung des Rolluntersatzes (2) die Befestigungsbereiche (4) innerhalb der Vertiefung in Richtung der Eimermitte nach innen geschwenkt sind, so dass hierdurch die Überdeckung der Haltekante durch den Widerlagerrand aufgehoben ist.

8. Eimer (1) mit einem Rolluntersatz (2) nach dem vorhergehenden Anspruch, **dadurch gekennzeichnet, dass** die Vertiefung konisch ausgebildet ist, so dass der Rolluntersatz (2) von unten mit seinen nach oben hervorspringenden Befestigungsbereichen (4) in die Vertiefung einsetzbar ist, wobei bei Einschieben der Befestigungsbereiche (4) in die Vertiefung diese elastisch nach innen verbogen werden, bis sie nach Passieren der Halteränder, diese dann hintergreifend, nach außen zurückfedern.

9. Eimer (1) mit einem Rolluntersatz (2) nach einem der vorhergehenden Ansprüche, **dadurch gekennzeichnet, dass** der Verbindungsabschnitt (7) gegen die Kraft einer Rückstellfeder auseinanderziehbar ausgebildet ist.

10. Eimer (1) mit einem Rolluntersatz (2) nach einem der vorhergehenden Ansprüche, **dadurch gekennzeichnet, dass** zumindest auf einer Seite die Rolle (3) um eine vertikale Drehachse derart drehbar gelagert sind, dass sie in einer Rollrichtung einen Nachlauf aufweist.

11. Eimer (1) mit einem Rolluntersatz (2) nach einem der vorhergehenden Ansprüche, **dadurch gekennzeichnet, dass** der vordere Tragbereich (5) und der hintere Tragbereich (6) jeweils an gegenüberliegenden Seitenrändern einen seitlich hervorspringenden Radträger aufweisen, an dem jeweils eine Rolle (3) drehbar gelagert ist.

## Claims

1. Bucket (1) with a roller base (2), wherein
- the roller base (2) has a support region on which to place the bucket (1) with a front support region (5) and a rear support region (6) connecting to the front support region (5) by means of a connecting section (7) and at least one roller (3) to move the roller base (2) and
- the bucket (1) with its lower area on the support region and located on it in such a way that it is secured against displacement in at least one direction parallel to the base of the bucket (1), **characterised in that**
the bucket (1) has at least one retaining edge, interlockable from above and from the centre of the bucket (1), in the lower area on retention locations arranged above the front support region (5) and the rear support region (6) respectively, and the roller base (2) has a securing area (4) extending upwards with a mating edge projecting outwards in the front support region (5) and in the rear support region (6) respectively under the retention locations, said mating edge being shaped in such a way that it is able to engage in the retaining edge to secure the roller base (2) to the base of the bucket (1), wherein, to release the roller base (2), the connecting section (7) is formed to be flexible so that, by pulling the connecting section (7), the securing areas (4) are pivoted inwards towards the centre of the bucket (1) and, by so doing, the engagement of the mating edge in the retaining edge is released.

2. Bucket (1) with a roller base (2) according to claim 1, **characterised in that** at least one roller (3) is arranged on the front support region (5) and on the rear support region (6) respectively.

3. Bucket (1) with a roller base (2) according to claim 1 or 2, **characterised in that** support surfaces on which to place the base of the bucket (1) are provided on the front support region (5) and on the rear support region (6) respectively on locations away from the connecting section (7).

4. Bucket (1) with a roller base (2) according to any one of the preceding claims, **characterised in that** the connecting section (7) is formed in two parts with a plug-in connection lockable by latching means.

5. Bucket (1) with a roller base (2) according to the preceding claim, **characterised in that** the plug-in connection is formed such that it is lockable by the latching means at different plug-in depths.

6. Bucket (1) with a roller base (2) according to any one of the preceding claims, **characterised in that** the front support region (5) and the rear support region (6) respectively have a securing region (4) in the form of a bump extending upwards from a mounting surface, wherein the securing area (4) is arranged respectively at the outer side of the support region opposite the connecting section (7).

7. Bucket (1) with a roller base (2) according to any one of the preceding claims, **characterised in that** in its base the bucket (1) has a recess in the form of a depression for accommodating the securing regions (4) respectively, wherein the retaining edge is arranged on the outer side of the bucket (1) towards the outer side of the recess and the upwardly projecting securing regions (4) of the roller base (2) can be inserted respectively into a recess while leaving sufficient play so that, by pulling on connecting section (7) and thus causing the roller base (2) to deform, the securing regions (4) are pivoted inwards inside the recess, so that, by so doing, the engagement of the mating edge in the retaining edge is released.

8. Bucket (1) with a roller base (2) according to the preceding claim, **characterised in that** the recess is formed in the shape of a cone so that the roller base (2) can be inserted into the recess from below with its securing regions (4) projecting upwards, wherein, as the securing regions (4) are pushed into the recess they are bent elastically inwards until they spring outwards again as they pass by the retaining edges, interlocking with them.

9. Bucket (1) with a roller base (2) according to any one of the preceding claims, **characterised in that** the connecting section (7) is formed so that it can be pulled apart against the force of a return spring.

10. Bucket (1) with a roller base (2) according to any one of the preceding claims, **characterised in that**, at least on one side, the roller(s) (3) is/are mounted to pivot on a vertical rotational axis such that it/they trail in the rolling direction.

11. Bucket (1) with a roller base (2) according to any one of the preceding claims, **characterised in that**, on opposing lateral edges, the front support region (5) and the rear support region (6) each have a laterally projecting wheel carrier to which a roller (3) is pivotably mounted in each case.

## Revendications

1. Panier (1) pourvu d'un chariot à roulettes (2), où
- le chariot à roulettes (2) comprend une zone de support permettant de poser le panier (1) avec une zone de support avant (5) et une zone de support arrière (6) reliée à la zone de support avant (5) par le biais d'une partie connexion (7) et présente au moins un galet (3) pour assurer le déplacement du chariot à roulettes (2) et
- le panier (1) peut être déposé sur la zone de support sur sa partie inférieure de façon être sécurisé contre tout glissement dans une direction parallèles au fond du panier (1), caractérisé en ce
le panier (1) comporte dans la zone inférieure, au niveau de positions d'arrêt disposées au-dessus de la zone de support avant (5) et de la zone de support arrière (6) respectivement au moins un bord d'arrêt pouvant s'accrocher par le haut et depuis le milieu du panier (1), le chariot à roulettes (2) présentant respectivement dans la zone de support avant (5) et dans la zone de support arrière (6) sous les positions d'arrêt une zone de fixation (4) s'étendant vers le haut, avec un bord du contre-palier en saillie vers l'extérieur, lequel est conçu pour s'engrener dans le bord d'arrêt au fond du panier (1) pour assurer la fixation du chariot à roulettes (2), où la partie connexion (7) permettant la libération du chariot à roulettes (2) est conçue de manière élastique pour que l'on tire sur la partie connexion (7) pour faire pivoter les zones de fixation (4) vers l'intérieur dans la direction du milieu du panier (1) et ainsi relever le couvercle du bord d'arrêt par l'intermédiaire du bord de contre-palier.

2. Panier (1) pourvu d'un chariot à roulettes (2), selon la revendication 1, **caractérisé en ce qu'**au moins un galet (3) est prévu respectivement au niveau de la zone de support avant (5) et de la zone de support arrière (6).

3. Panier (1) pourvu d'un chariot à roulettes (2), selon la revendication 1 ou la revendication 2, **caractérisé en ce que** des surfaces d'appui pour poser le fond du panier (1) sont prévues au niveau de la zone de support avant (5) et de la zone de support arrière (6), respectivement dans des positions tournant le dos à la partie connexion (7).

4. Panier (1) pourvu d'un chariot à roulettes (2) selon l'une des revendications précédentes, **caractérisé en ce que** la partie connexion (7) se compose de deux parties avec une connexion à fiche blocable par des moyens d'encliquetage.

5. Panier (1) pourvu d'un chariot à roulettes (2), selon la revendication précédente, **caractérisé en ce que** la connexion à fiche est conçue pour se bloquer à différentes profondeurs d'introduction à l'aide des moyens d'encliquetage.

6. Panier (1) pourvu d'un chariot à roulettes (2) selon l'une des revendications précédentes, **caractérisé en ce que** la zone de support (5) et la zone de support arrière (6) présentent respectivement une zone de fixation (4) sous forme de bosse s'étendant vers le haut à partir d'une surface de pose, où la zone de fixation (4) est disposée respectivement au niveau du côté externe de la zone de support opposée à la partie connexion (7).

7. Panier (1) pourvu d'un chariot à roulettes (2) selon l'une des revendications précédentes, **caractérisé en ce que** le panier (1) présente respectivement dans sa partie fond un évidement en forme de dépression pour recevoir les zone de fixation (4), où est disposé le bord d'arrêt au niveau du côté externe de l'évidement tourné vers le côté externe du panier (1) et les zones de fixation (4) du chariot à roulettes (2) en saillie vers le haut sont réglables respectivement dans un évidement en laissant un jeu de telle sorte qu'en tirant sur la partie connexion (7) et en provoquant ainsi la déformation du chariot à roulettes (2) les zones de fixation (4) pivotent vers l'intérieur à l'intérieur de l'évidement vers le milieu du panier pour ainsi relever le couvercle du bord d'arrêt par l'intermédiaire du bord du contre-palier.

8. Panier (1) pourvu d'un chariot à roulettes (2), selon la revendication précédente, **caractérisée en ce que** l'évidement est de forme conique au point que le chariot à roulettes (2) est réglable dans l'évidement par le bas à l'aide de ses zones de fixation (4) en saillie vers le haut, où l'on peut faire pénétrer les zones de fixation (4) dans l'évidement pour ainsi recourber élastiquement lesdites zones de fixation vers l'intérieur jusqu'à ce qu'elles se redéployent vers l'extérieur an passant par les bord d'arrêt et en s'engrenant dans ceux-ci.

9. Panier (1) pourvu d'un chariot à roulettes (2) selon l'une des revendications précédentes, **caractérisé en ce que** la partie connexion (7) est conçue pour s'étirer en s'opposant à la force d'une ressort de rappel.

10. Panier (1) pourvu d'un chariot à roulettes (2) selon l'une des revendications précédentes, **caractérisé en ce que** le galet (3) est monté rotatif au moins sur un côté autour d'un axe de rotation vertical de telle sorte que ledit galet présente un mouvement par inertie dans un sens de roulement.

11. Panier (1) pourvu d'un chariot à roulettes (2) selon l'une des revendications précédentes, **caractérisé en ce que** la zone de support avant (5) et la zone de support arrière (6) présentent respectivement un support de roue en saillie latérale au niveau de bords latéraux opposés, support au niveau duquel un galet (3) est monté rotatif.
